# EUROPEAN PATENT APPLICATION

(11) **EP 3 913 236 A1**
(43) Date of publication of application: **24.11.2021**
(21) Application number: 20175637.6
(22) Date of filing: 20.05.2020
(51) Int. Cl.: F16B 13/08, F16B 37/04

(54) **FASTENING DEVICE**

(71) Applicant: Hilti Aktiengesellschaft, 9494 Schaan (LI)
(72) Inventor: Doherty, Pauric, 6800 Feldkirch (AT); Plaschkes, Ran, 86916 Kaufering (DE)
(74) Representative: Hilti Aktiengesellschaft Corporate Intellectual Property

(57) **Abstract**

A fastening device (10) for fastening an object to a substructure in a fastening direction comprises a frame (20), a threaded spindle (40) rotatably mounted to the frame and having a spindle axis, a spindle nut (50) screwed on the spindle and linearly movable along the spindle axis by rotating the spindle about the spindle axis, a holder (30) having an abutment face for abutting upon the object in the fastening direction, and a counterholder (60) hinged to the spindle nut and comprising a first arm (70) pointing from the spindle nut in a first-arm direction and having a first counter-abutment face for abutting upon the substructure in a direction opposite to the fastening direction.

## Description

### TECHNICAL FIELD

Described herein is a fastening device for fastening an object to a substructure in a fastening direction. Also described herein are associated parts and methods of use thereof.

### BACKGROUND ART

In many applications, there is the need to fasten to, or couple with, elements. One such application is fastening an object to a substructure in a fastening direction, therein using a fastening device for clamping the object to the substructure. A fastening device may comprise a bottom part, a clamp, and a screw with a nut, all parts loosely connected to each other before fastening.

One constraint with such fastening applications relates to handling. For large objects, such as gratings, the substructure may be difficult to access. In a first step, the clamp is inserted in an opening of the grating from a top side of the grating. Subsequently, one needs to ensure that the clamp is correctly positioned to engage the grating on the top side and the substructure on a bottom side of the grating. This may include a special three-dimensional movement of the fastening device which is complicated and time-consuming, and which requires a certain degree of experience by a worker. In a final step, the screw is tightened to make the clamp push the grating against the substructure.

Offering an alternative design that addresses some or all of the above constraints or at least offers the public a choice may be useful.

### SUMMARY

The above constraints are addressed by a fastening device for fastening an object to a substructure in a fastening direction, comprising a frame, a threaded spindle rotatably mounted to the frame and having a spindle axis, a spindle nut screwed on the spindle and linearly movable along the spindle axis by rotating the spindle about the spindle axis, a holder having an abutment face for abutting upon the object in the fastening direction, and a counterholder hinged to the spindle nut and comprising a first arm pointing from the spindle nut in a first-arm direction and having a first counter-abutment face for abutting upon the substructure in a direction opposite to the fastening direction. Installing the fastening device from one side of the object may be safely and/or easily and/or quickly possible.

In a preferred embodiment, the counterholder comprises a second arm pointing from the spindle nut in a second-arm direction and having a second counter-abutment face for abutting upon the object in a direction opposite to the fastening direction. Thereby, the counterholder may be supported by the object, which may result in a reduction of the force acting on the fastening device. Preferably, the second-arm direction is substantially opposite to the first-arm direction. Likewise preferably, the first and second arms are rigidly connected to each other.

In another preferred embodiment, the counterholder is pivotable about the spindle nut between a mounting position and a fastening position, wherein in the mounting position, the first-arm direction is substantially parallel to the spindle axis, and wherein in the fastening position, the first-arm direction is substantially perpendicular to the spindle axis. When the counterholder is in the mounting position, the fastening device can easily be inserted in an opening of the object. When the counterholder is in the fastening position, the fastening device can safely engage the substructure.

In another preferred embodiment, the counterholder comprises a recess providing a clearance for the spindle during pivoting by the counterholder about the spindle nut. In a likewise preferred embodiment, the frame comprises a passage providing a clearance for the counterholder during pivoting by the counterholder about the spindle nut.

In another preferred embodiment, the frame comprises a guide for guiding the spindle nut along the spindle axis during rotation of the spindle about the spindle axis. Preferably, the guide comprises a guide channel, wherein the spindle nut engages the guide channel during its movement along the spindle axis.

In another preferred embodiment, the frame comprises an upper bearing and a lower bearing, and wherein the spindle is held in position with respect to the frame by the upper and lower bearings. Preferably, the spindle comprises an upper head bearing against the upper bearing in the fastening direction and/or a lower head bearing against the lower bearing in a direction opposite to the fastening direction.

In another preferred embodiment, the holder comprises a hook for clasping the object.

In another preferred embodiment, at least one of the frame, the holder and the counterholder comprises a sheet metal part. In a likewise preferred embodiment, at least one of the frame, the holder and the counterholder has a U-shaped cross section.

### BRIEF DESCRIPTION OF THE DRAWINGS

Further aspects and advantages of the fastening tool, associated parts and a method of use thereof will become apparent from the ensuing description that is given by way of example only and with reference to the accompanying drawings in which:
- Fig. 1: illustrates a fastening device in a side-view from a first side,
- Fig. 2: illustrates the fastening device of Fig. 1 in a side-view from a second side perpendicular to the first side,
- Fig. 3: illustrates the fastening device of Fig. 1 in a side-view from a third side opposite to the first side,
- Fig. 4: illustrates the fastening device of Fig. 1 in a side-view from the third side after fastening,
- Fig. 5: illustrates a fastening device at the beginning of fastening an object to a substructure,
- Fig. 6: illustrates the fastening device of Fig. 5 during fastening the object to the substructure,
- Fig. 7: illustrates the fastening device of Fig. 5 during fastening the object to the substructure, and
- Fig. 8: illustrates the fastening device of Fig. 5 after fastening the object to the substructure.

### DETAILED DESCRIPTION

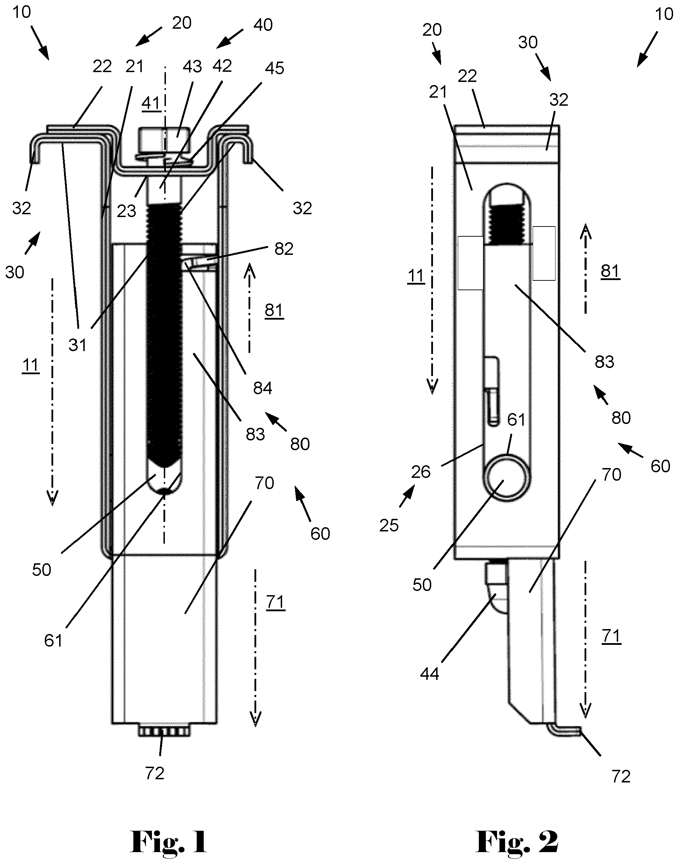

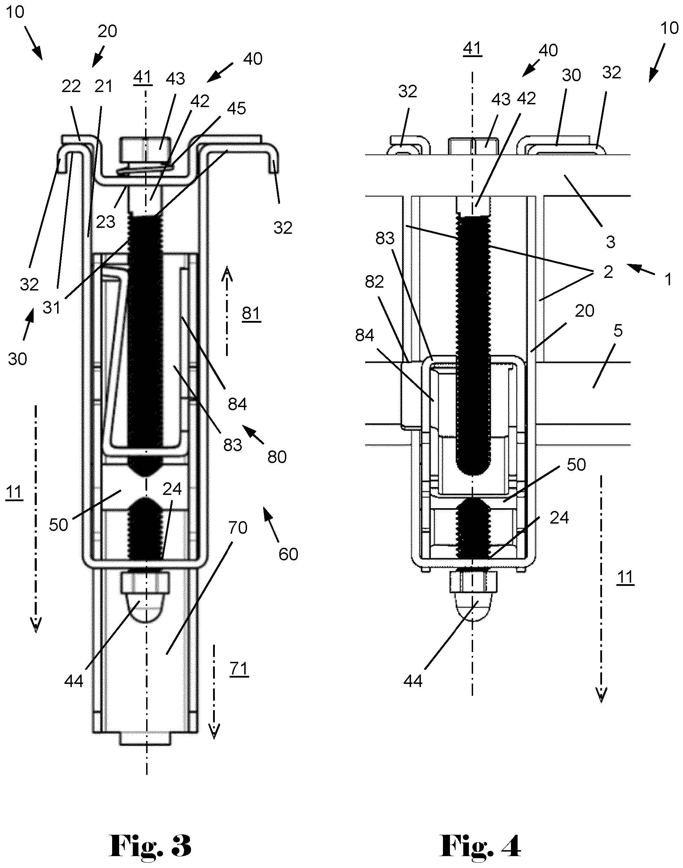

Figs. 1, 2, 3, and 4 show a fastening device 10 for fastening an object 1 to a substructure 5 in a fastening direction 11. As shown in Fig. 4, the object 1 is a grating having load bars 2 and cross bars 3. The substructure 5 may be a T-shaped beam or similar construction element, e.g. of a building such as a powerplant.

The fastening device 10 comprises a frame 20 comprising a main plate 21 and an upper plate 22 each of which is made of a sheet metal part and has a generally U-shaped cross section. The fastening device 10 further comprises a holder 30 having two abutment faces 31 for abutting upon the object 1 in the fastening direction 11. The holder 30 comprises two hooks 32 each provided for clasping the object 1, particularly one of the load bars 2, respectively, as shown in Fig. 4. Each of the hooks 32 is made of a sheet metal part and has a U-shaped cross section. The holder 30, particularly each of the hooks 32, and the frame 20, particularly the main plate 21, are rigidly connected to each other and preferably together form one single element. In a non-shown embodiment, the holder and the upper plate are rigidly connected to each other or together form one single element.

The fastening device 10 further comprises a threaded spindle 40 mounted to the frame 20. The spindle 40 comprises a shaft 42 having a thread and defining a spindle axis 41 which is oriented in parallel to the fastening direction 11. In an upper end region of the shaft 42, the spindle 40 comprises an upper head 43. The upper head 43 and the shaft 42 together form one single element. The upper head 43 may comprise a screw drive, such as a Phillips, external or internal Hex, Torx or similar drive, enabling rotatingly driving the spindle 40. In a lower end region of the shaft 42, the spindle 40 comprises a lower head 44. The lower head 44 comprises a cap nut screwed on the lower end region of the shaft 42.

The frame 20, particularly the upper plate 22, comprises an upper bearing 23 which may be formed as a hole in the upper plate 22. Further, the frame 20, particularly the main plate 21, comprises a lower bearing 24 which may be formed as a hole in the main plate 21. The spindle 40 is held in position with respect to the frame 20 by the upper and lower bearings 23, 24. To this end, the upper head 43 bears against the upper bearing 23 in the fastening direction 11 and the lower head 44 bears against the lower bearing 24 in a direction opposite to the fastening direction 11. In this arrangement, the main plate 21 and the upper plate 22 are held together by the spindle 40. A spring washer 45 arranged between the upper head 43 and the upper bearing 23 pre-tensions the upper plate 22 against the main plate 21, thereby preventing the main plate 21, upper plate 22 and/or spindle 40 from loose movement with respect to each other.

The fastening device 10 further comprises a spindle nut 50 which has an inner thread (not shown) and which is screwed on the spindle 40. Rotating the spindle 40 about the spindle axis 41 causes the spindle nut 50 to linearly move along the spindle axis 41. To this end, the frame 20 comprises a guide 25 for guiding the spindle nut 50 along the spindle axis 41 during rotation of the spindle 40 about the spindle axis 41. The guide 25 comprises two guide channels 26 each formed as a slot which is oriented in parallel to the spindle axis 41. The spindle nut 50 has a longitudinal shape and engages the guide channels 26 such that the spindle nut 50 is prevented from rotating about the spindle axis 41 during its movement along the spindle axis 41.

The fastening device 10 further comprises a counterholder 60 which is hinged to the spindle nut 50. To this end, the spindle nut 50 has a cylindrical shape and the counterholder 60 has a bore 61 receiving the spindle nut 50. The counterholder 60 comprises a first arm 70 pointing from the spindle nut 50 in a first-arm direction 71. The first arm 70 has a first counter-abutment face 72 for abutting upon the substructure 5 in a direction opposite to the fastening direction 11. The first counter-abutment face 72 is serrated to reduce slipping between the first arm 70 and the substructure 5. Further, the counterholder 60 comprises a second arm 80 pointing from the spindle nut 50 in a second-arm direction 81 and comprising an arm element 83 and a support element 84 carried by the arm element 83.

With respect to the arm element 83, the support element 84 is movable between an inactive position (shown in Fig. 3) and an active position (shown in Fig. 4). In the active position, the support element 84 extends through an opening provided at the arm element 83. The support element 84 is spring-biased into its active position and provides the corresponding spring force by its form as a spring clip. However, if the counterholder 60 is in the position shown in Figs. 1, 2, 3, the frame 20 forces the support element 84 into its inactive position. When the counterholder 60 pivots into the position shown in Fig. 4, the support element 84 is released and quickly moves into its active position, in a direction which is inclined, or perpendicular with respect to the second-arm direction 81, the spindle axis 41, and the fastening direction 11. The second arm 80, particularly the support element 84, has a second counter-abutment face 82 for abutting upon the object 1 in a direction opposite to the fastening direction 11 when the support element 84 is in its active position. In the active position of the support element 84, the second counter-abutment face 82 protrudes behind the arm element 83 and the frame 20.

The second-arm direction 81 is opposite to the first-arm direction 71. The first arm 70 and the arm element 83 of the second arm 80 are rigidly connected to each other and form one single element which is made of a sheet metal part and has a U-shaped cross section opening downwards in the position shown in Fig. 4. Further, the counterholder 60 is provided with a recess 61 formed as a slot and providing a clearance for the spindle 40 when the counterholder 60 pivots about the spindle nut 50. The frame 20, by its U-shaped cross section, forms a passage providing a clearance for the counterholder 60 during its pivoting about the spindle nut 50.

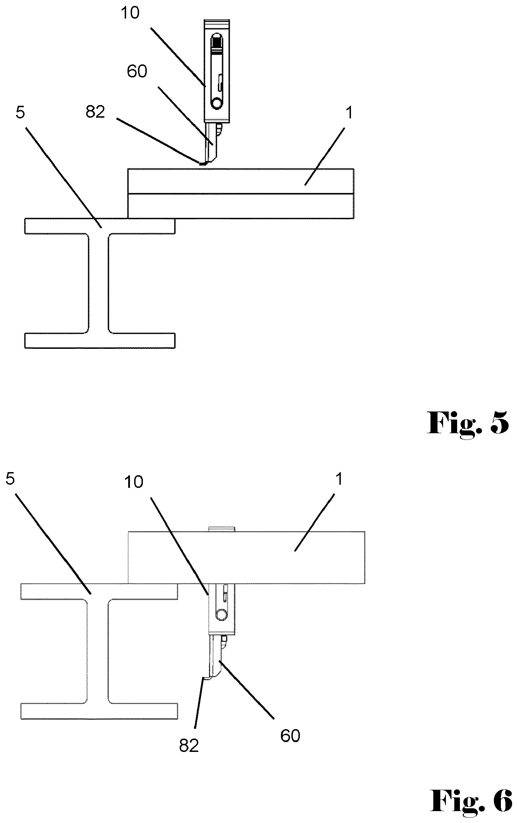

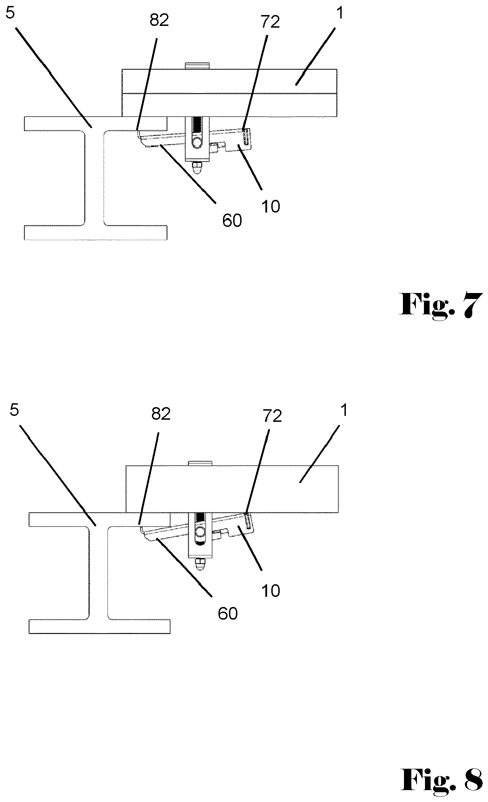

Fig. 5, 6, 7, and 8 show the fastening device 10 during fastening the object 1 to the substructure 5. In a first step (Fig. 5), the fastening device 10 is inserted in a straight movement into an opening of the object 1, until the holder 30 abuts upon one or two of the load bars 2 of the object 1 (Fig. 6). In a subsequent step (Fig. 7), the counterholder 60 pivots about the spindle nut 50 from a mounting position (shown in Figs. 1, 2, 3, 5, 6) in which the first-arm direction 71 is substantially parallel to the spindle axis 41, to a fastening position (shown in Figs. 4, 7, 8) in which the first-arm direction 71 is substantially perpendicular to the spindle axis 41. In a final step, the spindle 40 is rotated so as to move the spindle nut 50 upwards until the first counter-abutment face 72 abuts the substructure 5 and the second counter-abutment face 82 abuts one of the load bars 2 of the object 1.

When the counterholder 60 is in the mounting position, easy insertion of the fastening device in the opening of the object 1 is enabled. When the counterholder 60 is in the fastening position, safe engagement behind the substructure 5 by the fastening device 10 is provided. In this way, the fastening device 10 is easily and safely installed from one side of the object 1.

The foregoing description of exemplary embodiments of the invention have been presented for purposes of illustration and of description. It is not intended to be exhaustive or to limit the invention to the precise form disclosed, and modifications and variations are possible in light of the above teachings or may be acquired from practice of the invention. The functionality described may be distributed among modules that differ in number and distribution of functionality from those described herein. Additionally, the order of execution of the functions may be changed depending on the embodiment. The embodiments were chosen and described in order to explain the principles of the invention and as practical applications of the invention to enable one skilled in the art to utilize the invention in various embodiments and with various modifications as suited to the particular use contemplated. It is intended that the scope of the invention be defined by the claims appended hereto and their equivalents.

## Claims

1. A fastening device for fastening an object to a substructure in a fastening direction, comprising a frame, a threaded spindle rotatably mounted to the frame and having a spindle axis, a spindle nut screwed on the spindle and linearly movable along the spindle axis by rotating the spindle about the spindle axis, a holder having an abutment face for abutting upon the object in the fastening direction, and a counterholder hinged to the spindle nut and comprising a first arm pointing from the spindle nut in a first-arm direction and having a first counter-abutment face for abutting upon the substructure in a direction opposite to the fastening direction.

2. A fastening device according to claim 1, wherein the counterholder comprises a second arm pointing from the spindle nut in a second-arm direction and having a second counter-abutment face for abutting upon the object in a direction opposite to the fastening direction.

3. A fastening device according to claim 2, wherein the second-arm direction is substantially opposite to the first-arm direction.

4. A fastening device according to any of claims 2 and 3, wherein the first and second arms are rigidly connected to each other.

5. A fastening device according to any of the preceding claims, wherein the counterholder is pivotable about the spindle nut between a mounting position and a fastening position, wherein in the mounting position, the first-arm direction is substantially parallel to the spindle axis, and wherein in the fastening position, the first-arm direction is substantially perpendicular to the spindle axis.

6. A fastening device according to any of the preceding claims, wherein the counterholder comprises a recess providing a clearance for the spindle during pivoting by the counterholder about the spindle nut.

7. A fastening device according to any of the preceding claims, wherein the frame comprises a passage providing a clearance for the counterholder during pivoting by the counterholder about the spindle nut.

8. A fastening device according to any of the preceding claims, wherein the frame comprises a guide for guiding the spindle nut along the spindle axis during rotation of the spindle about the spindle axis.

9. A fastening device according to claim 8, wherein the guide comprises a guide channel, and wherein the spindle nut engages the guide channel during its movement along the spindle axis.

10. A fastening device according to any of the preceding claims, wherein the frame comprises an upper bearing and a lower bearing, and wherein the spindle is held in position with respect to the frame by the upper and lower bearings.

11. A fastening device according to claim 10, wherein the spindle comprises an upper head bearing against the upper bearing in the fastening direction.

12. A fastening device according to any of claims 10 and 11, wherein the spindle comprises a lower head bearing against the lower bearing in a direction opposite to the fastening direction.

13. A fastening device according to any of the preceding claims, wherein the holder comprises a hook for clasping the object.

14. A fastening device according to any of the preceding claims, wherein at least one of the frame, the holder and the counterholder comprises a sheet metal part.

15. A fastening device according to any of the preceding claims, wherein at least one of the frame, the holder and the counterholder has a U-shaped cross section.
